(19) Europäisches Patentamt
European Patent Office
Office européen des brevets

(11) **EP 3 521 020 A1**

(12) **EUROPEAN PATENT APPLICATION**
published in accordance with Art. 153(4) EPC

(43) Date of publication:
07.08.2019 Bulletin 2019/32

(51) Int Cl.:
B32B 27/18 (2006.01)   B29C 45/16 (2006.01)
B29C 47/06 (2006.01)   B29C 51/12 (2006.01)
B29C 51/14 (2006.01)   B32B 27/00 (2006.01)
B32B 27/30 (2006.01)   B32B 27/36 (2006.01)

(21) Application number: 17856206.2

(22) Date of filing: 27.09.2017

(86) International application number:
PCT/JP2017/034921

(87) International publication number:
WO 2018/062257 (05.04.2018 Gazette 2018/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 30.09.2016 JP 2016193603

(71) Applicant: Kuraray Co., Ltd.
Okayama 710-0801 (JP)

(72) Inventor: OZAWA, Yushi
Tainai-shi
Niigata 959-2691 (JP)

(74) Representative: Müller-Boré & Partner
Patentanwälte PartG mbB
Friedenheimer Brücke 21
80639 München (DE)

(54) **LAYERED DECORATIVE FILM, METHOD FOR MANUFACTURING SAME, DECORATIVE MOLDED BODY, AND METHOD FOR MANUFACTURING SAME**

(57) The present invention provides a layered decorative film that excels in toughness and is less likely to experience film damage, such as a crack, a break, or a tear, when an unnecessary portion of the film is trimmed. A layered decorative film (10X) according to the present invention includes a surface layer (11) composed of a thermoplastic resin (A) and a base layer (12) composed of a thermoplastic resin (B). The thermoplastic resin (A) includes a multilayer structure rubber particle (Y). The layered decorative film (10X) according to the present invention satisfies the following expressions (1) to (4), in which D ($\mu$m) is a mean particle size of the multilayer structure rubber particle (Y), C (mass%) is the concentration of the multilayer structure rubber particle (Y) in the thermoplastic resin (A), R (-) is the ratio of the thickness of the surface layer (11) relative to the total thickness of the surface layer (11) and the base layer (12), and Ch (kJ/m$^2$) is the Charpy impact value of the thermoplastic resin (B).

$$D \times C \times (Ch^{0.5})/R \geq 100 \cdots (1)$$

$$0.1 \leq D \leq 0.3 \cdots (2)$$

$$15 \leq C \leq 50 \cdots (3)$$

$$0.1 \leq R \leq 0.3 \cdots (4)$$

EP 3 521 020 A1

Fig. 1

10X

11

12

**Description**

**Technical Field**

The present invention relates to layered decorative films, methods of manufacturing the layered decorative films, decorative molded products, and methods of manufacturing the decorative molded products.

**Background Art**

In recent years, in regard to various exterior or interior components used in automobiles, consumer electrical appliances, interior furniture, and so on, there has been an increasing demand for three-dimensional molded products having complex shapes for the purpose of, for example, improving design sophistication (design qualities) and for obtaining components which are more lightweight. As such a three-dimensional molded product, a decorative molded product in which an adherend molded product made of resin is overlaid with a decorative film made of resin is preferable as such a decorative molded product can have a highly sophisticated exterior design and be manufactured by a simplified manufacturing process.

To date, one mainstream method of manufacturing a three-dimensional decorative molded product is integral molding in which an adherend molded product three-dimensionally molded in advance is overlaid with a decorative film and this is then pressed. In recent years, another method has been developed in which film insert molding, vacuum forming, and the like are applied to a decorating process and thus molding of an adherend molded product or three-dimensional molding of a decorative film is carried out simultaneously with overlaying of the adherend molded product with the decorative film. In the present specification, the term "decorating process" refers to a process of overlaying an adherend molded product with a decorative film.

A three-dimensional decorative molded product is manufactured with the use of film insert molding in a decorating process roughly as follows (see Patent Literatures 1, 2, and so on). A decorative film obtained through a well-known method is three-dimensionally molded through vacuum forming, and any unnecessary portion thereof is trimmed through stamping. Then, an adherend molded product is injection-molded under the presence of the three-dimensionally molded decorative film through film insert molding.

A three-dimensional decorative molded product is manufactured with the use of vacuum forming in a decorating process roughly as follows (see Patent Literatures 3, 4, and so on). A decorative film obtained through a well-known method is tightly affixed, through vacuum forming, onto an adherend molded product three-dimensionally molded in advance so as to conform to the three-dimensional shape of the adherend molded product, and an unnecessary portion of the decorative film is trimmed. For vacuum forming, a TOM (three dimension overlay method) is preferable.

Patent Literature 5 discloses, as a layered film suitable for a decorative film, a layered film in which a thermoplastic resin film and an acryl-based resin film composed of an acryl-based resin composition containing a rubber-containing polymer are overlaid on top of each other (Claims 1, 3, 5, 6, and so on).

**Citation List**

**Patent Literature**

Patent Literature 1: Japanese Unexamined Patent Application Publication No. H11-245261

Patent Literature 2: Japanese Unexamined Patent Application Publication No. 2007-118597

Patent Literature 3: Japanese Unexamined Patent Application Publication No. 2008-265029

Patent Literature 4: Japanese Unexamined Patent Application Publication No. 2012-056252

Patent Literature 5: Japanese Unexamined Patent Application Publication No. 2012-144714

**Summary of Invention**

**Technical Problem**

However, the decorative film described in Patent Literature 5 has insufficient toughness. Thus, the film may experience damage, such as a crack, a break, or a tear, when an unnecessary portion of the film is trimmed, and the quality of the decorative molded product obtained in the end may be degraded.

The present invention has been made in view of the above issue and is directed to providing a layered decorative film that excels in toughness and is less likely to experience film damage, such as a crack, a break, or a tear, when an unnecessary portion of the film is trimmed.

**Solution to Problem**

[1] A layered decorative film comprising:

a surface layer composed of a thermoplastic resin (A); and
a base layer composed of a thermoplastic resin (B), wherein
the thermoplastic resin (A) includes a multilayer structure rubber particle (Y), and
the following expressions (1) to (4) are satisfied, wherein D ($\mu$m) is a mean particle size of the multilayer structure rubber particle (Y), C (mass%) is a concentration of the multilayer structure rubber particle (Y) in the thermoplastic resin (A), R (-) is a ratio of a thickness of the surface layer relative to a total thickness of the surface layer and the base layer, and Ch (kJ/m$^2$) is a Charpy impact value of the thermoplastic resin (B).

$$D \times C \times (Ch^{0.5})/R \geq 100 \cdots (1)$$

$$0.1 \leq D \leq 0.3 \cdots (2)$$

$$15 \leq C \leq 50 \cdots (3)$$

$$0.1 \leq R \leq 0.3 \cdots (4)$$

[2] The layered decorative film according to [1], in which the thermoplastic resin (A) further includes a methacryl-based resin.
[3] The layered decorative film according to [1] or [2], in which the thermoplastic resin (B) includes a styrene-based resin and/or a polycarbonate-based resin.
[4] The layered decorative film according to any one of [1] to [3], in which the thermoplastic resin (A) and/or the thermoplastic resin (B) further includes a colorant.
[5] The layered decorative film according to any one of [1] to [4] further includes an adhesive resin layer on the base layer.
[6] A method of manufacturing the layered decorative film according to any one of [1] to [5], the method including forming a multilayer structure of the surface layer and the base layer through coextrusion molding.
[7] A decorative molded product includes an adherend molded product overlaid with the layered decorative film according to any one of [1] to [5].
[8] A method of manufacturing the decorative molded product according to [7], the method including overlaying, through vacuum forming, the adherend molded product molded in advance with the layered decorative film so as to conform to the shape of the adherend molded product.
[9] A method of manufacturing the decorative molded product according to [7], the method including molding, through film insert molding, the adherend molded product under the presence of the layered decorative film manufactured in advance.

**Advantageous Effects of Invention**

The present invention can provide a layered decorative film that excels in toughness and is less likely to experience film damage, such as a crack, a break, or a tear, when an unnecessary portion of the film is trimmed.

**Brief Description of the Drawings**

Fig. 1 is a schematic sectional view of a layered decorative film according to a first embodiment of the present invention;
Fig. 2 is a schematic sectional view of a layered decorative film according to a second embodiment of the present invention;
Fig. 3 is a schematic sectional view of a decorative molded product according to the first embodiment of the present invention; and
Fig. 4 is a schematic sectional view of a decorative molded product according to the second embodiment of the present invention.

**Description of Embodiments**

[Layered Decorative Film]

A layered decorative film according to the present invention includes a surface layer composed of a thermoplastic resin (A) including one or more types of multilayer structure rubber particle (Y) and a base layer composed of a thermoplastic resin (B). The layered decorative film according to the present invention can further include an adhesive resin layer on the base layer. If necessary, the layered decorative film according to the present invention can further include one or more other desired layers.

The layered decorative film according to the present invention satisfies the following expressions (1) to (4), in which D ($\mu$m) is a mean particle size of the multilayer structure rubber particle (Y), C (mass%) is the concentration of the multilayer structure rubber particle (Y) in the thermoplastic resin (A), R (-) is the ratio of the thickness of the surface layer relative to the total thickness of the surface layer and the base layer, and Ch (kJ/m$^2$) is the Charpy impact value of the thermoplastic resin (B).

$$D \times C \times (Ch^{0.5})/R \geq 100 \cdots (1)$$

$$0.1 \leq D \leq 0.3 \cdots (2)$$

$$15 \leq C \leq 50 \cdots (3)$$

$$0.1 \leq R \leq 0.3 \cdots (4)$$

In general, a sheet-like molded product having a thickness of 5-250 $\mu$m is classified mainly as a "film," and a sheet-like molded product having a thickness of greater than 250 $\mu$m is classified mainly as a "sheet." In the present specification, however, unless particularly specified otherwise, both of these sheet-like molded products are collectively referred to as a "film."

The numerical values identified in the present specification are measured values obtained through the methods described below in the section [Examples], unless particularly specified otherwise.

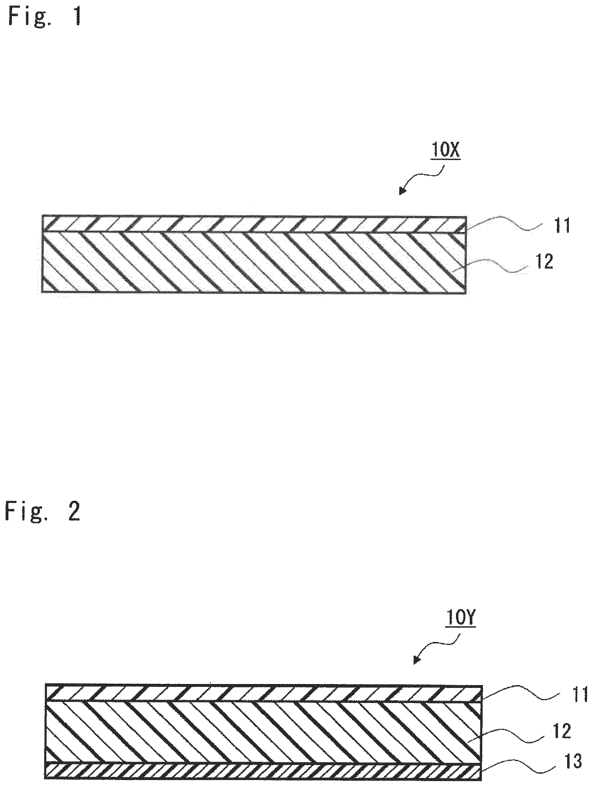

Figs. 1 and 2 are schematic sectional views of layered decorative films according to first and second embodiments of the present invention. In the drawings, the same components are given the same reference numbers.

As illustrated, each of layered decorative films 10X and 10Y according to the first and second embodiments is a layered film that includes a surface layer 11 composed of a thermoplastic resin (A) and a base layer 12 composed of a thermoplastic resin (B). The layered decorative film 10Y further includes an adhesive resin layer 13 on the base layer 12.

The layered decorative film 10X having a multilayer structure of the surface layer 11 and the base layer 12 can preferably be used to manufacture a decorative molded product for which film insert molding is used in a decorating process. The layered decorative film 10Y having a multilayer structure of the surface layer 11, the base layer 12, and the adhesive resin layer 13 can preferably be used to manufacture a decorative molded product for which vacuum forming is used in a decorating process.

(Surface Layer)

The surface layer is composed of a thermoplastic resin (A) including one or more types of multilayer structure rubber particle (Y). If necessary, the thermoplastic resin (A) includes one or more types of matrix resin. Examples of the thermoplastic resin suitable for the matrix resin include a methacryl-based resin (X), a styrene-based resin, and a polycarbonate-based resin (PC). From the viewpoint of weatherability, transparency, and surface hardness, the thermoplastic resin (A) preferably includes one or more types of methacryl-based resin (X).

<Methacryl-Based Resin (X)>

Examples of the methacryl-based resin (X) include a homopolymer of methyl methacrylate (hereinafter, may be abbreviated to "MMA") and a copolymer of MMA and one or more types of other monomers. Examples of the monomers other than MMA include an acrylic acid ester, such as methyl acrylate or ethyl acrylate; a methacrylic acid ester other than MMA; an unsaturated carboxylic acid; an olefin; a conjugated diene; and an aromatic vinyl compound. Preferable examples of the methacryl-based resin (X) include a methyl methacrylate (co)polymer obtained by (co)polymerizing 100-90 mass% of MMA and, if necessary, 0-10 mass% of an acrylic acid alkyl ester having a carbon number of 4-5. With regard to tacticity, the methacryl-based resin (X) is normally atactic or may also be isotactic, heterotactic, or syndiotactic.

<Multilayer Structure Rubber Particle (Y)>

There is no particular limitation on the multilayer structure rubber particle (Y), and examples include an acryl-based multilayer structure rubber particle including one or more types of graft copolymer layer including one or more types of acrylic acid alkyl ester copolymer. As such an acryl-based multilayer structure rubber particle, what is disclosed in Japanese Unexamined Patent Application Publication No. 2004-352837 and so on can be used. There is no particular limitation on the number of layers in the multilayer structure rubber particle (Y), and there may be two layers or three or more layers. Preferably, the multilayer structure rubber particle (Y) is a core-shell structure particle (Y-CS) of three or more layers including an innermost layer (y-1), one or more intermediate layers (y-2), and an outermost layer (y-3). Preferred modes of the core-shell structure particle (Y-CS) of three or more layers and of a core-shell structure particle of two layers consisting of an intermediate layer (y-2) and an outermost layer (y-3) will be described below.

A constituent polymer of the innermost layer (y-1) includes an MMA unit and a grafted or cross-linkable monomer unit and can further include other monomer unit, if necessary. Well-known monomers can be used as the other monomer that can be copolymerized with a grafted or cross-linkable monomer and MMA.

The content of the MMA unit in the constituent polymer of the innermost layer (y-1) is preferably 80-99.99 mass%, more preferably 85-99 mass%, or particularly preferably 90-98 mass%. The proportion of the innermost layer (y-1) in the core-shell structure particle (Y-CS) of three or more layers is preferably 0-15 mass% or more preferably 7-13 mass%. When the proportion of the innermost layer (y-1) is within the stated range, the heat resistance of the surface layer can be increased.

A constituent polymer of the intermediate layer (y-2) includes an acrylic acid alkyl ester unit and a grafted or cross-linkable monomer unit and can further include one or more types of other monomer units, if necessary. Examples of the acrylic acid alkyl ester include n-propyl acrylate, isopropyl acrylate, n-butyl acrylate, isobutyl acrylate, pentyl acrylate, hexyl acrylate, octyl acrylate, 2-ethylhexyl acrylate, and cyclohexyl acrylate. Well-known monomers can be used as the other monomer that can be copolymerized with a grafted or cross-linkable monomer and the acrylic acid alkyl ester.

The content of the acrylic acid alkyl ester unit in the constituent polymer of the intermediate layer (y-2) is preferably 70-99.8 mass%, more preferably 75-90 mass%, or particularly preferably 78-86 mass%. The proportion of the intermediate layer (y-2) in the core-shell structure particle (Y-CS) of three or more layers is preferably 40-60 mass% or more preferably 45-55 mass%. When the proportion of the intermediate layer (y-2) is within the stated range, the surface hardness of the surface layer can be increased to keep the surface layer less likely to fracture.

A constituent polymer of the outermost layer (y-3) includes an MMA unit and can further include one or more types of other monomer units, if necessary. Well-known monomers can be used as the other monomer that can be copolymerized with MMA. The content of the MMA unit in the constituent polymer of the outermost layer (y-3) is preferably 80-100 mass%, more preferably 85-100 mass%, or particularly preferably 90-100 mass%. The proportion of the outermost layer (y-3) in the core-shell structure particle (Y-CS) of three or more layers is preferably 35-50 mass% or more preferably 37-45 mass%. When the proportion of the outermost layer (y-3) is within the stated range, the surface hardness of the surface layer can be increased.

To effectively increase the toughness of the surface layer and to effectively suppress an occurrence of film damage, such as a crack, a break, or a tear, that could arise when the film is trimmed, the mean particle size D of the multilayer structure rubber particle (Y) is preferably 0.1-0.3 μm or more preferably 0.1-0.25 μm. When the mean particle size D is less than 0.1 μm, the toughness of the surface layer may become insufficient, and film damage, such as a crack, a break, or a tear, may occur when the film is trimmed. When the mean particle size D exceeds 0.3 μm, the surface smoothness of the surface layer may decrease when the layered decorative film undergoes secondary molding (e.g., three-dimensional molding) to reduce the design sophistication of the decorative molded product. The term "mean particle size D" as used in the present specification refers to a particle size measured to the intermediate layer (y-2) of the multilayer structure rubber particle (Y). This value can be measured, for example, through the methods described below in the section [Examples].

To effectively increase the toughness of the surface layer and to effectively suppress an occurrence of film damage, such as a crack, a break, or a tear, that could arise when the film is trimmed, the concentration C of the multilayer structure rubber particle (Y) in the thermoplastic resin (A) is 15-50 mass% or preferably 20-45 mass% from the viewpoint of providing toughness to the surface layer. When the concentration C is less than 15 mass%, the toughness of the surface layer may become insufficient, and film damage, such as a crack, a break, or a tear, may occur when the film is trimmed. When the concentration C of the multilayer structure rubber particle (Y) exceeds 50 mass%, the surface hardness of the surface layer may become insufficient, and the surface smoothness may decrease when the layered decorative film undergoes secondary molding (e.g., three-dimensional molding) to reduce the design sophistication of the decorative molded product.

<Colorant>

If necessary, the thermoplastic resin (A) can include one or more types of colorant. Examples of the colorant include a pigment, a dye, and a combination thereof.

Examples of the dye include anthraquinones, azo-based dye, anthrapyridones, perylenes, anthracenes, perinones, indanthrones, quinacridones, xanthenes, thioxanthenes, oxazines, oxazolines, indigoids, thioindigoids, quinophthalones, naphthalimides, cyanines, methines, pyrazolones, lactones, coumarins, bis-benzoxazolylthiophenes, naphthalenetetracarboxylic acids, phthalocyanines, triarylmethanes, aminoketones, bis(styryl)biphenyls, azines, rhodamines, derivatives of the above, and combinations of the above. Perinones, perylenes, azos, methines, and quinolines are preferable, and anthraquinones are more preferable from the viewpoint of high heat resistance and weatherability.

The pigment may be an organic pigment or an inorganic pigment. Examples of the organic pigment include an azo-based organic pigment, an azomethine-based organic pigment, a polyazo-based organic pigment, a phthalocyanine-based organic pigment, a quinacridone-based organic pigment, an anthraquinone-based organic pigment, an indigo-based organic pigment, a thioindigo-based organic pigment, a quinophthalone-based organic pigment, a benzimidazolone-based organic pigment, an isoindoline-based organic pigment, an isoindolinone-based organic pigment, and a diacetoacetarilide-based organic pigment. Examples of the inorganic pigment include carbon black (CB), titanium oxide, zinc white, zinc oxide, lithopone, iron oxide, aluminum oxide, silicon dioxide, kaolinite, montmorillonite, talc, barium sulfate, calcium carbonate, silica, alumina, cadmium red, red oxide, molybdenum red, chrome vermilion, molybdate orange, chrome yellow, chrome yellow, cadmium yellow, yellow iron oxide, titanium yellow, chromium oxide, viridian, cobalt green, titanium cobalt green, cobalt chrome green, ultramarine blue, ultramarine blue, iron blue, cobalt blue, cerulean blue, manganese violet, cobalt violet, and mica.

<Other Additive>

If necessary, the thermoplastic resin (A) can include one or more types of other additive. Examples of the other additive include an antioxidant, a stabilizer, an ultraviolet absorber, a lubricant, a processing aid, an antistatic agent, a colorant, an impact resistance aid, a foaming agent, a filler, and a delustering agent.

The thickness of the surface layer is designed as appropriate so as to satisfy the ratio R (-) of the thickness in accordance with the application of the decorative molded product and the required performance of the layered decorative film. The thickness of the surface layer is preferably 10-200 μm, more preferably 30-120 μm, or particularly preferably 50-100 μm. When this thickness is less than 10 μm, the surface hardness of the layered decorative film may become insufficient. If the surface layer includes a colorant, the color of the base layer may be seen through the surface layer, and the design sophistication of the decorative molded product may be reduced. When the thickness exceeds 200 μm, the toughness of the surface layer may become insufficient, and film damage, such as a crack, a break, or a tear, may occur when the layered decorative film is trimmed. In addition, the total thickness of the surface layer and the base layer may be increased, and the moldability and the handleability of the film may be reduced.

To effectively increase the toughness of the surface layer and to effectively suppress an occurrence of film damage, such as a crack, a break, or a tear, that could arise when the film is trimmed, the ratio R (-) of the thickness of the surface layer relative to the total thickness of the surface layer and the base layer is 0.1-0.3 or preferably 0.13-0.25. When this ratio R of the thickness is less than 0.1, the surface hardness of the layered decorative film may become insufficient. If the surface layer includes a colorant, the color of the base layer may be seen through the surface layer, and the design sophistication may be reduced. When the ratio R of the thickness exceeds 0.3, the toughness of the layered decorative film may become insufficient. Thus, the handleability may be reduced, or film damage, such as a crack, a break, or a tear, may occur during trimming, for example.

(Base Layer)

The base layer is composed of a thermoplastic resin (B). There is no particular limitation on the thermoplastic resin composing the thermoplastic resin (B). Examples of the thermoplastic resin include a methacryl-based resin that excels in impact resistance, a styrene-based resin that excels in impact resistance, a polycarbonate-based resin (PC), and a combination of the above.

Examples of the styrene-based resin include polystyrene, acrylonitrile-butadiene-styrene copolymer (ABS resin), styrene-maleimide copolymer, styrene-N-phenylmaleimide copolymer, styrene-N-phenylmaleimide-acrylonitrile copolymer, styrene-N-phenylmaleimide-methyl methacrylate copolymer, styrene-N-phenylmaleimide-butyl acrylate copolymer, rubber-reinforced impact resistant polystyrene, styrene-acrylonitrile copolymer (AS resin), ethylene-propylene rubber-reinforced styrene-acrylonitrile copolymer (AES resin), polyacrylic acid ester rubber-reinforced styrene-acrylonitrile copolymer (AAS resin), styrene-methyl methacrylate copolymer (MS resin), styrene-methyl methacrylate-butadiene copolymer (MBS resin), and a combination of the above.

It is preferable to use at least an ABS resin as the styrene-based resin from the viewpoint of impact resistance, handleability, moldability, and adhesiveness with an injected resin when being applied to insert molding. Preferable among the ABS resins is an ABS resin (SR) that includes an ABS resin of a graft copolymer structure (this polymer is rubber) and further includes, if necessary, one or more types of other styrene-based resin. The ABS resin (SR) can include, for example, an ABS resin of a graft copolymer structure and an AS resin that is a styrene-based resin. There is no particular limitation on the concentration of the ABS resin of a graft copolymer structure in the ABS resin (SR) (hereinafter, may be referred to simply as "rubber concentration"), and the rubber concentration is preferably 15-80 mass% or more preferably 30-70 mass%. When the rubber concentration is no lower than the stated lower limit, the trimming performance of the layered decorative film can be improved effectively. When the rubber concentration is no higher than the stated upper limit, the ABS resin (SR) can be used more easily in extrusion molding, and the durability of the layered decorative film can be improved effectively. The "rubber concentration in the ABS resin (SR)" in the present specification can be measured through the methods described below in the section [Examples].

The polycarbonate-based resin (PC) is a resin that includes a carbonate unit and can be obtained through a reaction of a polyfunctional hydroxy compound and a carbonic acid ester-forming compound. Examples of the polyfunctional hydroxy compound include 4,4'-dihydroxybiphenyls that may have a substituent; and bis(hydroxyphenyl)alkanes that may have a substituent. Among the above, 2,2-bis(4-hydroxyphenyl)propane is preferable. Examples of the carbonic acid ester-forming compound include various carbonyl dihalides such as phosgene, haloformate such as chloroformate, and a carbonic acid ester compound such as bisaryl carbonate. The amount of the carbonic acid ester-forming compound may be adjusted as appropriate in consideration of the stoichiometric ratio (equivalent) of the reaction. If necessary, the polycarbonate-based resin (PC) can include, aside from the aforementioned unit, one or more types of unit having any one of a polyester structure, a polyurethane structure, a polyether structure, and a polysiloxane structure.

There is no particular limitation on the viscosity-average molecular weight of the polycarbonate-based resin (PC), and the viscosity-average molecular weight is preferably 13,000-30,000 from the viewpoint of the ease of film formation in extrusion molding. There is no particular limitation on the melt viscosity of the polycarbonate-based resin (PC) at 250°C and at 100 sec$^{-1}$, and the melt viscosity is preferably 13,000-60,000 poise from the similar viewpoint. The molecular weight and the melt viscosity can be controlled by adjusting the amount of a chain-terminating agent and/or a branching agent.

<Colorant>

If necessary, the thermoplastic resin (B) can include one or more types of colorant. Examples of the colorant include a pigment, a dye, and a combination thereof. The colorants similar to those that can be used in the thermoplastic resin (A) can be used is the thermoplastic resin (B). From the viewpoint of concealing the color of the adherend molded product in the decorative molded product, a black colorant is preferable. In particular, from the viewpoint of cost, carbon black (CB) or the like is preferable.

<Other Additive>

If necessary, the thermoplastic resin (B) can include one or more types of other additive. The additives similar to those that can be used in the thermoplastic resin (A) can be used in the thermoplastic resin (B).

<Thickness of Base Layer>

There is no particular limitation on the thickness of the base layer as long as the ratio R (-) of the thickness is satisfied. The thickness of the base layer is preferably 100-500 $\mu$m, more preferably 140-450 $\mu$m, or particularly preferably 250-400 $\mu$m. When the thickness is less than 100 $\mu$m, the toughness of the layered decorative film may become insufficient, and film damage, such as a crack, a break, or a tear, may occur during trimming. When the thickness exceeds 500 $\mu$m, an effect of noticeably increasing the trimming performance therebeyond cannot be expected, and as the total thickness of the surface layer and the base layer increases, the moldability and the handleability may be reduced.

There is no particular limitation on the value of $Ch^{0.5}$ (the square root of the Charpy impact value Ch) as long as the expression (1) above can be satisfied. The value of Ch is preferably 5-100, more preferably 15-100, particularly preferably 20-100, or most preferably 30-100. When the value of $Ch^{0.5}$ is no lower than 5, the trimming performance can be improved effectively.

(Adhesive Resin Layer)

As illustrated in Fig. 2, the layered decorative film according to the present invention can include an adhesive resin layer on the base layer, if necessary. As described above, the layered decorative film having a multilayer structure of surface layer/base layer/adhesive resin layer can be used preferably to manufacture a decorative molded product for which vacuum forming is used in a decorating process. The adhesive resin layer can increase the adhesiveness between the base layer of the layered decorative film and the adherend molded product.

The adhesive resin layer includes one or more types of adhesive bonding resin and/or one or more types of adhesive resin. Examples of the adhesive bonding resin include aliphatic polyamide, a typical epoxy-based resin, dimer acid-modified epoxy resin, and NBR (nitrile butadiene rubber)-modified epoxy resin. Examples of the adhesive resin include acryl-based adhesive resin. When the adhesive resin layer includes one or more types of adhesive resin, the adhesive resin layer can further include a well-known cross-linker, if necessary.

An uncured adhesive bonding resin has moderate viscoelasticity, and thus the adhesive bonding resin allows the layered decorative film to be affixed favorably to the adherend molded product with a relatively lower pressure, as compared to the adhesive resin. In addition, the adhesive bonding resin can exhibit high cohesion without undergoing a reaction for an extended period of time under a high temperature, and the adhesive resin layer can exhibit high bonding strength when the decorative molded product is manufactured through vacuum forming or the like.

There is no particular limitation on the thickness of the adhesive resin layer, and thickness of the adhesive resin layer is preferably 5-100 $\mu$m or more preferably 10-50 $\mu$m. When the thickness is within the stated range, the layered decorative film and the adherend molded product can be affixed to each other at a high bonding strength when the decorative molded product is manufactured through vacuum forming or the like.

The total thickness of the surface layer and the base layer of the layered decorative film according to the present invention is designed as appropriate so as to satisfy the ratio R (-) of the thickness in accordance with the application of the decorative molded product and the required performance of the layered decorative film. The total thickness is preferably 150-700 $\mu$m or more preferably 200-500 $\mu$m. When the total thickness of the surface layer and the base layer is less than 150 $\mu$m, if the surface layer includes a colorant, the color of the base layer may be seen through the surface layer, and the design sophistication may be reduced. When the total thickness of the surface layer and the base layer exceeds 700 $\mu$m, the moldability, the handleability, and the trimming performance may become insufficient.

The layered decorative film according to the present invention satisfies the expression (1) below. When the layered decorative film satisfies the expression (1) below, the toughness of the film improves effectively, making it possible to provide a layered decorative film that is less likely to experience film damage, such as a crack, a break, or a tear, when an unnecessary portion of the film is trimmed.

$$D \times C \times (Ch^{0.5})/R \geq 100 \cdots (1)$$

(Desired Layer)

If necessary, the layered decorative film according to the present invention can include one or more desired layers aside from the surface layer, the base layer, and the adhesive resin layer. Examples of the desired layer include a hard coat layer, an anti-soiling layer, and an anti-reflection layer.

(Method of Manufacturing Layered Decorative Film Having Multilayer Structure of Surface Layer/Base Layer)

The layered decorative film having a multilayer structure of surface layer/base layer can be manufactured through a well-known film forming technique, and extrusion molding or the like is preferable from the viewpoint of production efficiency and inter-layer adhesiveness.

In the case of extrusion molding, a resin (P) for the surface layer and a resin (Q) for the base layer that are melt-compounded with the use of different extruders may each be extruded into a film from different extrusion dies (e.g., T die), and the films may then be overlaid on top of each other. Alternatively, a resin (P) for the surface layer and a resin (Q) for the base layer that are melt-compounded with the use of different extruders may be coextruded from a common extrusion die. Examples of the coextrusion die system include a multi-manifold die system and a field block system.

In the feed block system, a molten resin (P) for the surface layer and a molten resin (Q) for the base layer are overlaid on top of each other with a feed block, molded into a film shape upon being guided to a T die, and then extruded. In the multi-manifold system, a molten resin (P) for the surface layer and a molten resin (Q) for the base layer are overlaid on top of each other in a multi-manifold die, molded into a film shape upon being guided to a T die, and then extruded. In either system, an unsolidified layered film extruded from a T die or the like is cooled upon passing through at least a gap in a pair of cooling pressing rolls and is then taken up by a take-up roll. From the viewpoint of uniformity in the thickness of each layer, a multi-manifold die is preferable.

In extrusion molding, the molten resin that has not been formed into a film can be allowed to pass through a polymer filter to have impurity or the like removed therefrom, if necessary. Examples of the polymer filter include a leaf-type polymer filter and a pleated polymer filter, and a pleated polymer filter is preferable. There is no particular limitation on the sieve opening of the polymer filter, and the sieve opening is preferably 5-40 $\mu$m.

(Method of Manufacturing Layered Decorative Film Having Multilayer Structure of Surface Layer/Base Layer/Adhesive Resin Layer)

The layered decorative film having a multilayer structure of surface layer/base layer/adhesive resin layer can be manufactured through coextrusion molding similar to that described for the layered decorative film having a multilayer structure of surface layer/base layer. Besides, after the layered decorative film having a multilayer structure of surface layer/base layer is molded through the above-described method, the adhesive resin layer may be formed on the base layer through a lamination technique or a coating technique.

As described thus far, the present invention can provide a layered decorative film that excels in toughness and is less likely to experience film damage, such as a crack, a break, or a tear, when an unnecessary portion of the film is trimmed.

[Decorative Molded Product]

In a decorative molded product according to the present invention, an adherend molded product is overlaid with the layered decorative film according to the present invention described above.

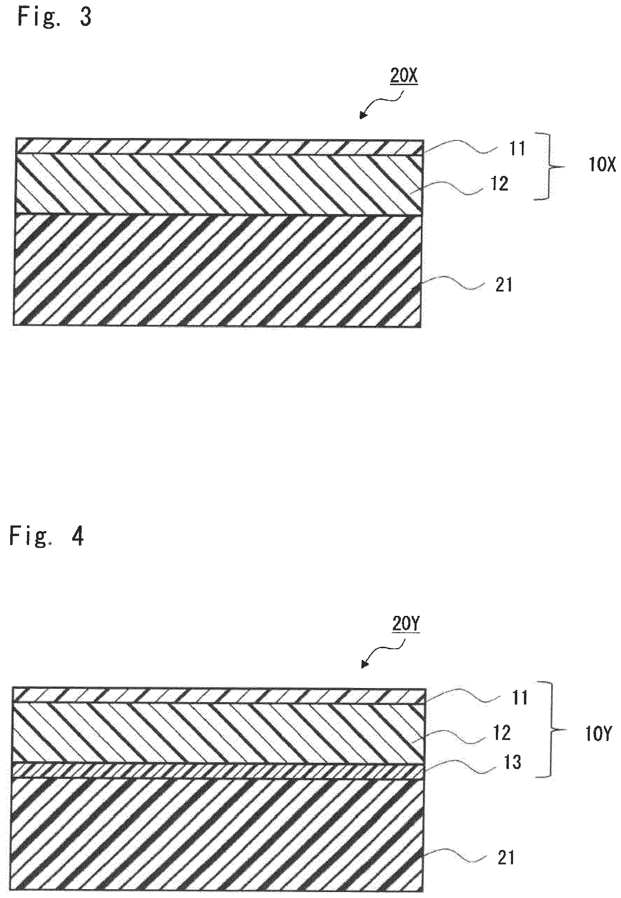

Figs. 3 and 4 are schematic sectional views of decorative molded products according to the first and second embodiments of the present invention. In Figs. 1 to 4, the same components are given the same reference characters. In Figs. 3 and 4, the reference numeral 21 denotes an adherend molded product having a desired shape and made of a desired material. The present invention can be applied preferably when an adherend molded product has a three-dimensional shape.

In a decorative molded product 20X according to the first embodiment illustrated in Fig. 3, at least a portion of the adherend molded product 21 is overlaid with the layered decorative film 10X illustrated in Fig. 1. The decorative molded product 20X is manufactured, through film insert molding, by molding the adherend molded product 21 under the presence of the layered decorative film 10X manufactured in advance.

Hereinafter, an example of a method of manufacturing the decorative molded product 20X having a three-dimensional shape will be described.

The layered decorative film 10X having a multilayer structure of surface layer/base layer manufactured through the above-described method is preformed into a desired three-dimensional shape through vacuum forming or the like, and an unnecessary portion is trimmed through stamping.

Then, the preformed layered decorative film 10X is set in an injection molding die, and the adherend molded product 21 is injection-molded by injecting a resin onto the base layer in the stated die. The temperature of the injected resin is typically 150-300°C or preferably 180-280°C, depending on the melt viscosity of the resin being used.

The decorative molded product 20X is manufactured as described above. In this method, the decorative film is three-dimensionally molded, and an unnecessary portion is trimmed. Thereafter, molding of the adherend molded product 21 and overlaying of the adherend molded product 21 with the layered decorative film 10X are carried out simultaneously.

In a decorative molded product 20Y according to the second embodiment illustrated in Fig. 4, at least a portion of the adherend molded product 21 is overlaid with the layered decorative film 10Y according to the second embodiment described above. The decorative molded product 20X is manufactured, through vacuum forming, by overlaying the adherend molded product 21 molded in advance with the layered decorative film 10Y so as to conform to the shape of the adherend molded product 21. For vacuum forming, the TOM (three dimension overlay method) is preferable.

Now, one mode of the TOM will be described. A vacuum air-pressure forming machine for the TOM includes one space portion that can be evacuated (forming space portion), a stage provided inside the space portion, and a fixing frame to which a film can be fixed. First, the adherend molded product 21 is set on the stage of the forming machine, and the layered decorative film 10Y is set on the fixing frame (the layered decorative film 10Y is flat at this point). The one space portion inside the forming machine is divided into two space portions by the layered decorative film 10Y fixed to the fixing frame. At this point, the adherend molded product 21 is set in one of the two space portions, and the other space portion is left empty. In this state, the two space portions are evacuated with the use of a vacuum pump or the like and are simultaneously heated with a (far-)infrared radiation heater or the like. When the layered decorative film 10Y is softened upon being heated, air is fed only into the empty space portion. Thus, the layered decorative film 10Y is tightly affixed onto the adherend molded product 21, which is in a vacuum atmosphere, so as to conform to the shape (typically three-dimensional shape) of the adherend molded product 21. Thereafter, the layered decorative film 10Y is removed from the fixing frame, an unnecessary portion of the layered decorative film 10Y is peeled off the stage, and the unnecessary portion is trimmed. In this method, the surface heating temperature held when the layered decorative film 10Y is molded is typically about 80-150°C or preferably about 110-140°C, and the unnecessary portion is typically trimmed at a room temperature. In this method, overlaying of the adherend molded product 21 with the layered decorative film 10Y and three-dimensional molding of the layered decorative film 10Y are carried out simultaneously.

(Adherend Molded Product)

There is no particular limitation on the shape of the adherend molded product, and the adherend molded product can have a plate-like shape (e.g., planar plate, curved plate), a three-dimensional shape, a sheet-like shape (or film-like shape), and so on. There is no particular limitation on the material of the adherend molded product, and examples include a wood fiberboard such as a veneer board, a plywood board, a particle board, or an MDF (mid-density fiberboard); a metal material such as iron or aluminum; ceramics such as glass and ceramics; a non-cement ceramic material such as gypsum; a non-ceramic material such as an ALC (autoclaved lightweight concrete) plate; a resin material such as an acryl-based resin, a polyester-based resin, a polystyrene-based resin, a polyolefin-based resin (e.g., polypropylene), an ABS resin, a polycarbonate-based resin, a phenol-based resin, a vinyl chloride-based resin, a cellulose-based resin, or rubber; and a combination of the above.

The decorative molded product according to the present invention is manufactured with the use of the layered decorative film according to the present invention described above, and thus film damage, such as a crack, a break, or a tear, of the layered decorative film can be suppressed in the manufacturing process. Therefore, according to the present invention, film damage, such as a crack, a break, or a tear, of the layered decorative film is suppressed, and a high-quality decorative molded product can be provided.

[Application]

The layered decorative film and the decorative molded product according to the present invention are suitable for decorative applications and suitable for applications where design sophistication, light-blocking property, and so on are required. Specifically, the layered decorative film and the decorative molded product according to the present invention find suitable application in signboard components including an advertising pillar, a stand signboard, a side signboard, a transom signboard, and a rooftop signboard; display components including a showcase, a divider panel, and a store display; illumination components including a fluorescent lamp cover, a mood lighting cover, a lamp shade, a luminous ceiling, a luminous wall, and a chandelier; interior design components including furniture, a pendant, and a mirror; construction components including a door, a dome, safety window glass, a partition, a staircase wainscot, a balcony wainscot, and a roof of a leisure building; transportation-related components including an aircraft windshield, a pilot visor, a motorcycle, a windshield for a motorboat, a shading plate for a bus, a side visor for an automobile, a rear visor, a head wing, a headlight cover, an automobile interior member, and an automobile exterior member (e.g., a bumper and a mold); acoustic components including a nameplate for an audiovisual system and a stereo cover; electronic device components including a protective mask for a television set, a vending machine, a cellular phone, and a personal computer; baby goods including an incubator; medical device components including an X-ray component; device-related components including a machine cover, an instrument cover, an experimental device, a ruler, a dial, and an observation window; traffic-related components including a road sign, a direction board, a convex traffic mirror, and a noise barrier;

a greenhouse; a large-sized tank, a box water tank, bathroom members including a bathtub, and sanitary items; a clock panel; office supplies including a desk mat; game components and toys; decorative and surface protective films for various member such as a face protecting mask used during welding; and wallpapers and marking films. Examples

Hereinafter, examples according to the present invention and comparative examples will be described.

[Items and Method for Evaluating Various Physical Properties]

(Weight-Average Molecular Weight (Mw), Molecular-Weight Distribution (Mw/Mn))

The weight-average molecular weight (Mw) of a resin and the molecular-weight distribution (Mw/Mn), or the ratio of the weight-average molecular weight (Mw) to the number-average molecular weight (Mn), were obtained through a GPC technique. 4 mg of a resin to be measured was dissolved in 5 ml of tetrahydrofuran (THF), which was then passed through a filter having a pore size of 0.1 $\mu$m to obtain a sample solution. As a GPC apparatus, "HLC-8320" manufactured by Tosoh Corporation and provided with a differential refractive index detector (RI detector) was used. As a column, one in which two "TSKgel Super Multipore HZM-M" and one "Super HZ4000," each manufactured by Tosoh Corporation, were connected in series was used. Tetrahydrofuran (THF) was used as an eluant. The temperature of a column oven was set at 40°C, 20 $\mu$l of the sample solution was introduced into the apparatus at an eluate flow rate of 0.35 ml/min, and the chromatogram was measured. The GPC measurement was carried out with the use of 10 pieces of standard polystyrenes with a molecular weight in a range of 400-5000000, and a calibration curve indicating the relationship between the retention time and the molecular weight was created. On the basis of this calibration curve, Mw and Mw/Mn of the resin to be measured were determined. The baseline of the chromatogram was served by a line connecting a point at which the slope of a peak on a higher molecular weight side in the GPC chart changed from zero to positive as viewed in a direction in which the retention time progressed and a point at which the slope of a peak on a lower molecular weight side changed from negative to zero as viewed in a direction in which the retention time progressed. When the chromatogram indicated a plurality of peaks, the baseline was served by a line connecting a point at which the slope of the peak on the highest molecular weight side changed from zero to positive and a point at which the slope of the peak on the lowest molecular weight side changed from negative to zero.

(Mean Particle Size D of Multilayer Structure Rubber Particle (Y))

A very thin piece was cut out from a layered decorative film with the use of a diamond knife, and this piece was stained with phosphotungstic acid (butyl acrylate part was stained) and was imaged with the use of a transmission electron microscope ("JSM-7600" manufactured by JEOL Ltd.). Specifically, an intermediate layer (y1-2) of a multilayer structure rubber particle (Y1) or an intermediate layer (y2-2) of a multilayer structure rubber particle (Y2) described later was stained and imaged. 30 multilayer structure rubber particles (Y) that were imaged in their entirety were selected at random, the diameter (major axis diameter) of the strained portion of each particle was obtained, and the mean value served as the mean particle size D.

(Rubber Concentration in ABS resin (SR))

The rubber concentration in the ABS resin (SR) was quantitated through the following method.

<Operation 1> 0.7 g of ABS resin (SR) was weighted and sampled into a screw vial.
<Operation 2> 70 mL of xylene (manufactured by Wako Pure Chemical Corporation, guaranteed reagent) was added to dissolve the ABS resin (SR).
<Operation 3> With the use of a centrifugal separator (KUBOTA 7780II), the obtained xylene solution was subjected to centrifugal separation at 17,000 rpm and for five minutes, and a supernatant liquid was removed to obtain a residue.
<Operation 4> The above <Operation 2> and <Operation 3> were repeated a total of three times.
<Operation 5> 70 mL of acetone (manufactured by Yamaichi Chemical Industries Co., Ltd.) was added to dissolve the residue obtained in <Operation 4>.
<Operation 6> Through a method similar to that in the above <Operation 3>, the obtained acetone solution was subjected to centrifugal separation at 17,000 rpm and for five minutes, and a supernatant liquid was removed to obtain a residue.
<Operation 7> The above <Operation 5> and <Operation 6> were repeated a total of three times.
<Operation 8> The obtained residue was dried, and the mass was measured. The obtained mass was compared against the mass of the prepared ABS resin (SR) to quantitate the rubber concentration.

(Charpy Impact Value Ch)

In accordance with JIS-K7111, a Charpy impact test piece having a thickness of 3.0 mm was fabricated, and the impact value was measured at a temperature of 23°C and with a relative humidity of 47%. The measurement was carried out ten times, and the mean value served as the Charpy impact value Ch.

[Manufacturing Examples]

(Materials)

<Methacryl-Based Resin (X)>

(X1) A copolymer of MMA and an acrylic acid ester, composition: MMA unit/methyl acrylate unit (mass ratio) = 97.5/2.5, the viscosity-average degree of polymerization: 1170

<Multilayer Structure Rubber Particle (Y)>

(Y1) A three-layer structure rubber particle consisting of an innermost layer (y1-1), an intermediate layer (yl-2), and an outermost layer (y1-3), the mean particle size D: 0.23 $\mu$m, the composition of the innermost layer (y1-1): MMA unit/methyl acrylate unit/allyl methacrylate (mass ratio) = 32.91/2.09/0.07, the composition of the intermediate layer (yl-2): butyl acrylate unit/styrene unit/allyl methacrylate (mass ratio) = 37.00/8.00/0.90, the composition of the outermost layer (y1-3): MMA unit/methyl acrylate unit (mass ratio) = 18.80/1.20

Allyl methacrylate used in the innermost layer (y1-1) and in the intermediate layer (y1-2) was a cross-linkable monomer (similarly applicable in (Y2)).

(Y2) A three-layer structure rubber particle consisting of an innermost layer (y2-1), an intermediate layer (y2-2), and an outermost layer (y2-3), the mean particle size D: 0.11 $\mu$m, the composition of the innermost layer (y2-1): MMA unit/methyl acrylate unit/allyl methacrylate (mass ratio) = 9.39/0.61/0.02, the composition of the intermediate layer (y2-2): butyl acrylate unit/styrene unit 41.11/allyl methacrylate unit (mass ratio) = 41.11/8.89/2.00, the composition of the outermost layer (y2-3): MMA unit/methyl acrylate unit (mass ratio) = 37.61/2.39

<Polycarbonate Resin (PC)>

(PC1) "300 Series" manufactured by Sumika Polycarbonate Ltd.

<ABS Resin (SR)>

(SR1) "EG100" manufactured by UMG ABS, Ltd., including ABS resin of a graft copolymer structure and AS resin, the rubber concentration: 42 mass%
(SR2) "SANTAC ET-70" manufactured by Nippon A&L Inc., including ABS resin of a graft copolymer structure and AS resin, the rubber concentration: 20 mass%

<Pigment>

(CB1) Mitsubishi Carbon Black #1000 (manufactured by Mitsubishi Chemical Corporation)

<Dye>

(G28) Solvent Green 28 (manufactured by LANXESS)
(G3) Solvent Green 3 (manufactured by LANXESS)
(V36) Solvent Violet 36 (manufactured by LANXESS)

[Manufacturing Examples 11-17]

(Resins (P-1) to (P-7) for Surface Layer)

A plurality of materials were melt-compounded with a single-screw extruder at mixing compositions shown in Table 1, and resins (P-1) to (P-7) for the surface layer that each include the methacryl-based resin (X), the multilayer structure rubber particle (Y), and the dyes were obtained.

[Manufacturing Examples 21-25]

(Resins (Q-1) to (Q-5) for Base Layer)

Resins (Q-1) to (Q-5) for the base layer that each include the pigment were obtained in a similarly manner to Manufacturing Examples 11-17 except that the mixing compositions were changed to those shown in Table 2.
In Tables 1 and 2, the unit for the mixing amount is mass%.

[Manufacturing Example 31]

(Acryl-Based Adhesive (R-1) for Adhesive Resin Layer)

65 parts by mass of butyl acrylate, 30 parts by mass of methyl acrylate, and 5 parts by mass of 2-hydroxyethyl acrylate were placed into a reaction vessel (equipped with a temperature controller, a stirrer, and a refluxer) under a nitrogen atmosphere, and 200 parts by mass of ethyl acetate and 0.1 parts by mass of azobisisobutyronitrile were added. The obtained mixture was subjected to a polymerization reaction at 75°C for 10 hours to obtain a polymer (R-a). The polymer (R-a) had Mw of 800,000.
Separately, 90 parts by mass of MMA and 10 parts by mass of dimethylaminoethyl methacrylate were placed into a reaction vessel (equipped with a temperature controller, a stirrer, and a refluxer) under a nitrogen atmosphere, and 200 parts by mass of ethyl acetate and 2 parts by mass of azobisisobutyronitrile were added. The obtained mixture was subjected to a polymerization reaction at 75°C for 10 hours to obtain a polymer (R-b). The polymer (R-b) had Mw of 10,000.
The above polymer (R-a), the above polymer (R-b), a cross-linker (TETRAD-X manufactured by Mitsubishi Gas Chemical Company, Inc.), and bistrifluoromethanesulfonimide were mixed to a dry mass ratio of 46:40:2:2 to obtain an acryl-based adhesive (R-1). The acryl-based adhesive (R-1) had a molecular-weight distribution (Mw/Mn) of 18.

[Example 1]

The resin (P-2) for the surface layer was extruded at a discharge rate of 2 kg/hr with the use of a 30-mmφ vented single-screw extruder, and simultaneously the resin (Q-1) for the base layer was extruded at a discharge rate of 18 kg/hr with the use of a 50-mmφ vented single-screw extruder. The extruded resins (P-2) and (Q-1) were overlaid on top of each other with the use of a multi-manifold die having a width of 300 mm, extruded at a temperature of 245°C, nipped by a rubber roll (surface temperature of 90°C) and a metal mirror finish roll (surface temperature of 95°C), and taken up at a rate of 3.1 m/min. In this manner, a first layered decorative film (surface layer/base layer) was manufactured, in which the surface layer had a thickness of 40 μm, the base layer had a thickness of 360 μm, and the surface layer and the base layer had a total thickness of 400 μm. The obtained film was evaluated for the trimming performance before being molded and for the trimming performance after being molded.
Then, the base layer of the first layered decorative film was coated with the acryl-based adhesive (R-1) to have a thickness after drying of 60 μm, which was dried in vacuum for 10 minutes at 80°C to obtain a second layered decorative film (surface layer/base layer/adhesive resin layer). This film was evaluated for the fracture resistance.
Primary manufacturing conditions are shown in Table 3-1.

[Examples 2-12, Comparative Examples 1-10]

First and second layered decorative films were manufactured and evaluated in a similar manner to Example 1 except that the starting resins and the thickness of each layer were changed as shown in Table 3-1 and Table 3-2.

[Evaluation Items And Evaluation Method in Examples And Comparative Examples]

(Trimming Performance Before Molding And Trimming Performance After Molding)

A test piece measuring 300 mm by 210 mm was cut out from the first layered decorative film (surface layer/base layer) obtained in each of Examples 1-12 and Comparative Examples 1-10, and the test piece was evaluated for the trimming performance before vacuum forming and after vacuum forming.

Vacuum forming was carried out with the use of a vacuum air-pressure forming machine ("NGF Type" manufactured by Fu-se Vacuum Forming Ltd.) and a rectangular parallelepiped die measuring 225 mm by 135 mm by 55 mm in height. The layered decorative film was placed in the die so that the base layer made contact with the inner surface of the die, and evacuation was started when the surface temperature of the film had reached 140°C.

With the use of a stamping apparatus ("SDL-200" manufactured by DUMBBELL CO., LTD.), a test piece measuring 80 mm by 80 mm was stamped out from each of a layered decorative film before vacuum forming and a layered decorative film after vacuum forming at a temperature of 23°C. A Thompson blade (38 mm by 38 mm manufactured by DUMBBELL CO., LTD.) was used as a stamping blade, and the stamping blade was made to abut the surface layer of the layered decorative film. A cutting mat was placed under the layered decorative film being stamped. The layered decorative film after vacuum forming was stamped out at a curved portion where the stretching rate was 200% (a portion where the total thickness held after molding was one half the total thickness held before molding). Each test piece was evaluated five times through visual observation, and the determination was made in accordance with the following standard.

      A: No crack occurred in any of the test pieces.
      B: A crack occurred in one test piece.
      C: A crack occurred in two or more test pieces.

(Fracture Resistance)

A test piece measuring 300 mm by 210 mm was cut out from the second layered decorative film (surface layer/base layer/adhesive resin layer) obtained in each of Examples 1-12 and Comparative Examples 1-10. As the adherend molded product, a rectangular parallelepiped resin molded product (made of ABS/polycarbonate alloy) measuring 80 mm in length by 120 mm in width by 25 mm by height was prepared. A vacuum air-pressure forming machine for the TOM was prepared. First, an adherend molded product was set on the stage in the forming machine, and a flat test piece was set on the fixing frame. One space portion inside the forming machine was divided into two space portions by the flat test piece fixed to the fixing frame. At this point, the adherend molded product was set in one of the two space portions, and the other space portion was left empty. In this state, the two space portions were evacuated with the use of a vacuum pump and were simultaneously heated with a far-infrared radiation heater. When the surface temperature of the test piece had reached 140°C, air was fed only into the empty space portion. Thus, the test piece was tightly affixed onto the adherend molded product, which was in a vacuum atmosphere, so as to conform to the shape of the adherend molded product. Thereafter, the test piece was removed from the fixing frame, an unnecessary portion of the test piece was peeled off the stage, and the test piece was visually observed. The evaluation was carried out five times, and the determination was made in accordance with the following standard.

      A: No crack or tear occurred in any of the test pieces.
      B: A crack and/or a tear occurred in one test piece.
      B: A crack and/or a tear occurred in two or more test pieces.

[Evaluation Results]

The evaluation results are shown in Table 4-1 and Table 4-2.

In Examples 1-12 and Comparative Examples 1-10, two types of layered decorative films-one having a multilayer structure of surface layer/base layer and one having a multilayer structure of surface layer/base layer/adhesive resin layer-were manufactured.

In each of Examples 1-12, manufactured was a layered decorative film in which a thermoplastic resin (A) included a multilayer structure rubber particle (Y) and that satisfied the following expressions (1) to (4), in which D ($\mu$m) was a mean particle size of the multilayer structure rubber particle (Y), C (mass%) was the concentration of the multilayer structure rubber particle (Y) in the thermoplastic resin (A), R (-) was the ratio of the thickness of a surface layer relative to the total thickness of the surface layer and a base layer, and Ch (kJ/m$^2$) was the Charpy impact value of the thermoplastic resin (B).

$$D \times C \times (Ch^{0.5})/R \geq 100 \cdots (1)$$

$$0.1 \leq D \leq 0.3 \cdots (2)$$

$$15 \leq C \leq 50 \cdots (3)$$

$$0.1 \leq R \leq 0.3 \cdots (4)$$

The layered decorative films each having a multilayer structure of surface layer/base layer obtained in Examples 1-12 all exhibited high trimming performance before molding and after molding. The layered decorative films each having a multilayer structure of surface layer/base layer/adhesive resin layer obtained in Examples 1-12 all exhibited high fracture resistance.

The layered decorative films each having a multilayer structure of surface layer/base layer obtained in Comparative Examples 1-10 in which $D \times C \times (Ch^{0.5})/R$ was less than 100 (i.e., Expression (1) was not satisfied) all experienced a crack during trimming before molding or after molding and exhibited low trimming performance before molding or after molding. The layered decorative films each having a multilayer structure of surface layer/base layer/adhesive resin layer obtained in Comparative Examples 3, 9, and 10 in which the concentration C (mass%) of the multilayer structure rubber particle (Y) in the thermoplastic resin (A) satisfied Expression (3) but $D \times C \times (Ch^{0.5})/R$ was no greater than 40 all exhibited low fracture resistance.

[Table 1]

| | Resin for Surface Layer | Methacryl-Based Resin | Multilayer Structure Rubber Particle | | Dye | | |
|---|---|---|---|---|---|---|---|
| | | (X1) | (Y1) | (Y2) | G28 | G3 | V36 |
| Manufacturing Example 11 | P-1 | 90.26 | 8.04 | | 0.50 | 0.90 | 0.30 |
| Manufacturing Example 12 | P-2 | 78.20 | 20.10 | | 0.50 | 0.90 | 0.30 |
| Manufacturing Example 13 | P-3 | 70.16 | 28.14 | | 0.50 | 0.90 | 0.30 |
| Manufacturing Example 14 | P-4 | 90.26 | | 8.04 | 0.50 | 0.90 | 0.30 |
| Manufacturing Example 15 | P-5 | 78.20 | | 20.10 | 0.50 | 0.90 | 0.30 |
| Manufacturing Example 16 | P-6 | 70.16 | | 28.14 | 0.50 | 0.90 | 0.30 |
| Manufacturing Example 17 | P-7 | 57.80 | | 40.50 | 0.50 | 0.90 | 0.30 |

[Table 2]

| | Resin for Base Layer | ABS Resin | | Methacryl-Based Resin | Multilayer Structure Rubber Particle | Polycarbonate-Based Resin | Pigment |
|---|---|---|---|---|---|---|---|
| | | (SR1) | (SR2) | (X1) | (Y1) | (PC1) | (CB1) |
| Manufacturing Example 21 | Q-1 | 99.00 | | | | | 1.00 |

(continued)

|  | Resin for Base Layer | ABS Resin | | Methacryl-Based Resin | Multilayer Structure Rubber Particle | Polycarbonate-Based Resin | Pigment |
|---|---|---|---|---|---|---|---|
|  |  | (SR1) | (SR2) | (X1) | (Y1) | (PC1) | (CB1) |
| Manufacturing Example 22 | Q-2 |  | 99.00 |  |  |  | 1.00 |
| Manufacturing Example 23 | Q-3 |  |  | 28.14 | 70.86 |  | 1.00 |
| Manufacturing Example 24 | Q-4 |  |  | 99.00 |  |  | 1.00 |
| Manufacturing Example 25 | Q-5 |  |  |  |  | 99.00 | 1.00 |

[Table 3-1]

| | Surface Layer | | | | | Base Layer | | | Total Thickness (μm) | D×C×(Ch^0.5)/R | Adhesive Resin Layer | |
|---|---|---|---|---|---|---|---|---|---|---|---|---|
| | Resin | Thickness (μm) | R(-) | Multilayer Structure Rubber Particle (Y) | | Resin | Thickness (μm) | Ch (kJ/m²) | | | Resin | Thickness (μm) |
| | | | | D (μm) | C (%) | | | | | | | |
| Example 1 | P-2 | 40 | 0.10 | 0.23 | 20.1 | Q-1 | 360 | 34 | 400 | 270 | R-1 | 60 |
| Example 2 | P-2 | 60 | 0.15 | 0.23 | 20.1 | Q-1 | 340 | 34 | 400 | 180 | R-1 | 60 |
| Example 3 | P-2 | 80 | 0.20 | 0.23 | 20.1 | Q-1 | 320 | 34 | 400 | 135 | R-1 | 60 |
| Example 4 | P-2 | 100 | 0.25 | 0.23 | 20.1 | Q-1 | 300 | 34 | 400 | 108 | R-1 | 60 |
| Example 5 | P-3 | 60 | 0.15 | 0.23 | 28.14 | Q-1 | 340 | 34 | 400 | 252 | R-1 | 60 |
| Example 6 | P-2 | 60 | 0.15 | 0.23 | 20.1 | Q-2 | 340 | 18 | 400 | 131 | R-1 | 60 |
| Example 7 | P-2 | 60 | 0.15 | 0.23 | 20.1 | Q-5 | 340 | 80 | 400 | 276 | R-1 | 60 |
| Example 8 | P-5 | 40 | 0.10 | 0.11 | 20.1 | Q-1 | 360 | 34 | 400 | 129 | R-1 | 60 |
| Example 9 | P-6 | 60 | 0.15 | 0.11 | 28.1 | Q-1 | 340 | 34 | 400 | 120 | R-1 | 60 |
| Example 10 | P-7 | 60 | 0.15 | 0.11 | 40.2 | Q-1 | 340 | 34 | 400 | 172 | R-1 | 60 |
| Example 11 | P-5 | 60 | 0.15 | 0.11 | 20.1 | Q-5 | 340 | 80 | 400 | 132 | R-1 | 60 |
| Example 12 | P-5 | 60 | 0.13 | 0.23 | 20.1 | Q-1 | 390 | 34 | 450 | 202 | R-1 | 60 |

EP 3 521 020 A1

[Table 3-2]

| | Surface Layer | | | | | Base Layer | | | Total Thickness (μm) | D × C × (Ch^0.5)/R | Adhesive Resin Layer | |
| | Resin | Thickness (μm) | R(-) | Multilayer Structure Rubber Particle (V) | | Resin | Thickness (μm) | Ch (kJ/m²) | | | Resin | Thickness (μm) |
| | | | | D (μm) | C (%) | | | | | | | |
|---|---|---|---|---|---|---|---|---|---|---|---|---|
| Comparative Example 1 | P-1 | 60 | 0.15 | 0.23 | 8.04 | Q-1 | 340 | 34 | 400 | 72 | R-1 | 60 |
| Comparative Example 2 | P-2 | 60 | 0.15 | 0.23 | 20.1 | Q-3 | 340 | 6.5 | 400 | 79 | R-1 | 60 |
| Comparative Example 3 | P-2 | 60 | 0.15 | 0.23 | 20.1 | Q-4 | 340 | 1.4 | 400 | 36 | R-1 | 60 |
| Comparative Example 4 | P-5 | 60 | 0.15 | 0.11 | 20.1 | Q-1 | 340 | 34 | 400 | 86 | R-1 | 60 |
| Comparative Example 5 | P-5 | 80 | 0.20 | 0.11 | 20.1 | Q-1 | 320 | 34 | 400 | 64 | R-1 | 60 |
| Comparative Example 6 | P-5 | 100 | 0.25 | 0.11 | 20.1 | Q-1 | 300 | 34 | 400 | 52 | R-1 | 60 |
| Comparative Example 7 | P-4 | 60 | 0.15 | 0.11 | 8.04 | Q-1 | 340 | 34 | 400 | 34 | R-1 | 60 |
| Comparative Example 8 | P-5 | 60 | 0.15 | 0.11 | 20.1 | Q-2 | 340 | 18 | 400 | 63 | R-1 | 60 |
| Comparative Example 9 | P-5 | 60 | 0.15 | 0.11 | 20.1 | Q-3 | 340 | 6.5 | 400 | 38 | R-1 | 60 |
| Comparative Example 10 | P-5 | 60 | 0.15 | 0.11 | 20.1 | Q-4 | 340 | 1.4 | 400 | 17 | R-1 | 60 |

EP 3 521 020 A1

[Table 4-1]

| | First Layered Decorative Film | | Second Layered Decorative Film |
|---|---|---|---|
| | Surface Layer/Base Layer | | Surface Layer/Base Layer/Adhesive Resin Layer |
| | Trimming Performance | | Fracture Resistance |
| | Before Molding | After Molding | |
| Example 1 | A | A | A |
| Example 2 | A | A | A |
| Example 3 | A | A | A |
| Example 4 | B | B | A |
| Example 5 | A | A | A |
| Example 6 | B | B | A |
| Example 7 | A | A | A |
| Example 8 | B | B | B |
| Example 9 | B | B | A |
| Example 10 | A | A | A |
| Example 11 | B | B | A |
| Example 12 | A | A | A |

[Table 4-2]

| | First Layered Decorative Film | | Second Layered Decorative Film |
|---|---|---|---|
| | Surface Layer/Base Layer | | Surface Layer/Base Layer/Adhesive Resin Layer |
| | Trimming Performance | | Fracture Resistance |
| | Before Molding | After Molding | |
| Comparative Example 1 | C | C | B |
| Comparative Example 2 | C | C | B |
| Comparative Example 3 | C | C | C |
| Comparative Example 4 | C | C | B |
| Comparative Example 5 | C | C | B |
| Comparative Example 6 | C | C | B |
| Comparative Example 7 | C | C | B |
| Comparative Example 8 | C | C | B |
| Comparative Example 9 | C | C | C |
| Comparative Example 10 | C | C | C |

The present invention is not limited by the foregoing embodiments and examples, and design changes can be made as appropriate within a scope that does not depart from the spirit of the present invention.

This application claims priority to Japanese Patent Application No. 2016-193603, filed on September 30, 2016, the entire disclosure of which is incorporated herein.

**Reference Signs List**

| | |
|---|---|
| 10X, 10Y | LAYERED DECORATIVE FILM |
| 20X, 20Y | DECORATIVE MOLDED PRODUCT |
| 11 | SURFACE LAYER |
| 12 | BASE LAYER |
| 13 | ADHESIVE RESIN LAYER |
| 21 | ADHEREND MOLDED PRODUCT |

**Claims**

1. A layered decorative film comprising:

   a surface layer composed of a thermoplastic resin (A); and
   a base layer composed of a thermoplastic resin (B), wherein
   the thermoplastic resin (A) includes a multilayer structure rubber particle (Y), and
   the following expressions (1) to (4) are satisfied, wherein D ($\mu$m) is a mean particle size of the multilayer structure rubber particle (Y), C (mass%) is a concentration of the multilayer structure rubber particle (Y) in the thermoplastic resin (A), R (-) is a ratio of a thickness of the surface layer relative to a total thickness of the surface layer and the base layer, and Ch (kJ/m$^2$) is a Charpy impact value of the thermoplastic resin (B).

$$D \times C \times (Ch^{0.5})/R \geq 100 \quad \cdots \quad (1)$$

$$0.1 \leq D \leq 0.3 \quad \cdots \quad (2)$$

$$15 \leq C \leq 50 \quad \cdots \quad (3)$$

$$0.1 \leq R \leq 0.3 \quad \cdots \quad (4)$$

2. The layered decorative film according to Claim 1, wherein the thermoplastic resin (A) further includes a methacryl-based resin.

3. The layered decorative film according to Claim 1 or 2, wherein the thermoplastic resin (B) includes a styrene-based resin and/or a polycarbonate-based resin.

4. The layered decorative film according to any one of Claims 1 to 3, wherein the thermoplastic resin (A) and/or the thermoplastic resin (B) further includes a colorant.

5. The layered decorative film according to any one of Claims 1 to 4, further comprising:
   an adhesive resin layer on the base layer.

6. A method of manufacturing the layered decorative film according to any one of Claims 1 to 5, the method comprising:
   forming a multilayer structure of the surface layer and the base layer through coextrusion molding.

7. A decorative molded product comprising:
   an adherend molded product overlaid with the layered decorative film according to any one of Claims 1 to 5.

8. A method of manufacturing the decorative molded product according to Claim 7, the method comprising:
   overlaying, through vacuum forming, the adherend molded product molded in advance with the layered decorative film so as to conform to a shape of the adherend molded product.

9. A method of manufacturing the decorative molded product according to Claim 7, the method comprising: molding, through film insert molding, the adherend molded product under the presence of the layered decorative film manufactured in advance.

Fig. 1

10X

11

12

Fig. 2

10Y

11

12

13

Fig. 3

Fig. 4

## INTERNATIONAL SEARCH REPORT

| International application No. |
|---|
| PCT/JP2017/034921 |

A. CLASSIFICATION OF SUBJECT MATTER

Int.Cl. B32B27/18(2006.01)i, B29C45/16(2006.01)i, B29C47/06(2006.01)i,
B29C51/12(2006.01)i, B29C51/14(2006.01)i, B32B27/00(2006.01)i,
B32B27/30(2006.01)i, B32B27/36(2006.01)i

According to International Patent Classification (IPC) or to both national classification and IPC

B. FIELDS SEARCHED

Minimum documentation searched (classification system followed by classification symbols)

Int.Cl. B32B1/00-B32B43/00, B29C45/00-B29C45/84, B29C47/00-B29C47/96,
B29C51/00-B29C51/46, C08L1/00-C08L101/166

Documentation searched other than minimum documentation to the extent that such documents are included in the fields searched

| | |
|---|---|
| Published examined utility model applications of Japan | 1922-1996 |
| Published unexamined utility model applications of Japan | 1971-2017 |
| Registered utility model specifications of Japan | 1996-2017 |
| Published registered utility model specifications of Japan | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2011-31498 A (SUMITOMO CHEMICAL CO., LTD.) 17 February 2011, claims, paragraphs [0012], [0016], [0025], [0040], [0044], [0047]-[0049], [0054], examples (Family: none) | 1-9<br>1-9 |
| X<br>Y | JP 2010-234640 A (SUMITOMO CHEMICAL CO., LTD.) 21 October 2010, claims, paragraphs [0028], [0046], [0048], [0053], [0055], [0058], [0062], examples (Family: none) | 1-9<br>1-9 |
| Y | JP 2011-11543 A (ASAHI KASEI CHEMICALS CORP.) 20 January 2011, claims, paragraphs [0053]-[0056], [0065], [0073]-[0075], examples (Family: none) | 1-9 |
| Y | JP 2013-56497 A (TEIJIN CHEMICALS LTD.) 28 March 2013, claims, paragraphs [0046], [0050], [0065], [0069], [0070] (Family: none) | 1-9 |

☐ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 November 2017 (28.11.2017) | 12 December 2017 (12.12.2017) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**EP 3 521 020 A1**

**Patent documents cited in the description**

- JP H11245261 B
- JP 2007118597 A
- JP 2008265029 A
- JP 2012056252 A
- JP 2012144714 A
- JP 2004352837 A
- JP 2016193603 A